# EUROPEAN PATENT SPECIFICATION

(11) **EP 2 923 976 B1**
(45) Date of publication and mention of the grant of the patent: **10.01.2018**
(21) Application number: 12816682.4
(22) Date of filing: 31.10.2012
(51) Int. Cl.: B65G 67/08, B65G 67/20, B65G 43/00

(54) **DEVICE AND METHOD FOR AUTOMATICALLY LOADING OBJECTS**
VORRICHTUNG UND VERFAHREN ZUM AUTOMATISCHEN LADEN VON ARTIKELN
APPAREIL ET PROCÉDÉ POUR LE CHARGEMENT AUTOMATIQUE D'OBJETS

(43) Date of publication of application: 30.09.2015
(73) Proprietor: Vanderlande Industries B.V., 5466 RB Veghel (NL)
(72) Inventor: RIGOL, Domingo Jordi, I., 08251 Santpedor, Barcelona (ES)
(74) Representative: Algemeen Octrooi- en Merkenbureau B.V.
(86) International application number: PCT/ES2012/070764
(87) International publication number: WO 2014/068149

(56) References cited:
- EP-A2- 2 151 402
- US-A- 3 836 021
- US-A- 4 595 331
- US-A- 5 403 142
- US-A- 5 685 416
- US-A1- 2009 169 349

## Description

The present invention relates to the field of transportation of goods, more specifically to the field of loading of objects in an enclosure, for example a container, a truck or a goods train.

A first object of the present invention is a device for automatic loading, which is equipped with sensors that allow the determination of the available free space enclosure where the objects are stored, allowing the optimization of the loading process.

A second object of the present invention is a method for automatic loading of objects using said device.

### Background of the invention

Nowadays some devices are known, which are used for loading objects in enclosures such as storage rooms, trucks or train boxes. In the context of the present invention, the term "object" covers any type of element that is susceptible of being loaded in one of such enclosures, either for its storage or for its transportation. Some examples of objects include packets, envelopes, grain, mineral, etc. Current loading devices are basically formed by a conveyor belt that has a rear end situated in a loading bay and a front end that can be introduced into the train or truck box. To perform the loading, objects are placed on the rear end of the belt, which transports the objects to the front end where these are unloaded, either automatically or by an operator.

There are more sophisticated models where the conveyor belt is telescopic or extensible, for example using a series of individual belts connected to each other, or where mechanisms that elevate or that make the distal end descend are used. These characteristics allow the distal extreme to move forwards, backwards, up or down in the interior of the enclosure according to the requirements, in order to perform a more efficient loading. These type of devices, commonly named telescopic belt conveyors, have a fixed base that contains the telescopic belt conveyors in its interior, which has several sections joined together that can be extended synchronously and progressively from the base section. Each of the sections is supported by wheels on which slides a steel plane rail that is welded to the bottom of the side plates of the sections, adjusting itself to each vertical telescopic section and laterally from the interior to guarantee the adequate alignment of the telescopic movement. One particular example of a device of this type is described in the international patent application WO 2012/049445. US5685416 discloses a material conveying apparatus and method.

Currently, most of the loading devices of this type are manual, for which it is necessary that an operator supervises the loading process in order to locate the distal end of the band in the right place in each moment during the loading process.

Some automatic loading devices are also known. However, these devices are based on the use of a fixed program that essentially designates a series of working times of the conveyor belt in different predetermined positions of the front end. This means, it is not taken into account, in real time, the current status of the load in the enclosure, instead objects are placed in places decided beforehand. Therefore, if the programming is not correct, an inefficient loading of the enclosure will be obtained or, in the worst case, impacts of the belt against the walls of the enclosure or with the objects that are being loaded, jamming of the objects in -certain places of the enclosure, etc., which can produce failures or malfunctions of the belt, the walls of the enclosure or the load.

### Description of the invention

The inventors of the present application have designed an automatic loading device that solves the above mentioned problems by means of the arrangement of a series of sensors on the front end of the conveyor belt. These sensors obtain information in real time regarding the surroundings of the front end of the conveyor belt, which allows for a safer and more efficient automatic loading process performance. In other words, it is capable of acting in real time, reacting to a specific situation and it adjusts automatically to different types of shapes of the load. Unlike devices currently known, it is not a sequence previously recorded.

A first aspect of the invention is directed to a device for automatically loading objects in an enclosure, wherein the device comprises a conveyor belt, and one processing means that controls the movements of one front end of the conveyor belt during the loading process. However, unlike the automatic devices currently known wherein the loading is performed following a static program, the device according to the invention further comprises proximity or presence sensors arranged on the front end of the conveyor belt for detecting the position of said front end with respect to the previously loaded objects and/or to the roof and/or the walls of the enclosure. In this way, the processing means of the device according to the invention controls the movements of the front end of the conveyor belt according to the information obtained in real time by said proximity sensors.

In principle, several means can be used to move the front end of the conveyor belt. For example, in the simplest case it could be a simple conveyor belt that moves as a whole to reach the desired position of its front end. However, in a preferred embodiment of the invention the conveyor belt is extensible by means of a telescopic mechanism, which allows the front end to move entering or exiting longitudinally along the enclosure. In another preferred embodiment, the conveyor belt is laterally movable on guides located on the ground, so that the front end moves transversally along the enclosure.

Regarding the sensors, the device comprises at least one sensor oriented in the vertical direction, a sensor oriented in the frontal direction, and a sensor oriented in the frontal direction inclined downwards. This group of sensors allows the determination of the height of the objects arranged in front of the front end of the conveyor belt, as well as the available distance that still exists between said point and the roof of the enclosure. By efficiently using that information, the processing means can decide if the loading can continue at such position, or by contrary, if it is necessary to move the frontal end of the conveyor band to continue the loading in another place.

In another preferred embodiment of the invention, the front end of the conveyor band further comprises at least two sensors oriented towards the sides. The purpose of these at least two lateral sensors is basically to check for any obstacles that may prevent lateral displacement of the belt, avoiding possible accidents due to impacts against the operators or the walls of the enclosure.

Preferably, the proximity or presence sensors are chosen from the group formed by: optical sensors, ultrasonic sensors, capacitive sensors, inductive sensors and Hall Effect sensors, or any other type of suitable sensor.

According to another preferred embodiment of the invention, the device further comprises a detector of the height of the transported objects on the conveyor belt. This detector allows the processing means to know the estimated size of the following object that will be loaded, so that it can take decisions regarding the most appropriate place to place it.

A second aspect of the present invention is directed to a method for automatically loading of objects in an enclosure using the device described above, comprising the following steps:
1) Finding the top edge of the previously loaded objects situated in front of the front end of the conveyor belt.
   Preferably, it is considered that the top edge of the previously loaded objects has been found when the sensor oriented in frontal direction does not detect any object and the sensor oriented in the frontal direction inclined downwards detects any object. In other words, as the sensor oriented in the frontal direction does not detect anything, it can be supposed that no object exists immediately in front of the front end of the belt, while if the sensor oriented in the frontal direction inclined downward detects something, it can be supposed that there is at least one object that occupies that space up to a somewhat lower height than the belt occupies. As a consequence, it is determined that the top border of a stack or heap of objects, situated in front of the front edge of the conveyor belt, has been found.
2) Verifying that between said top edge and the roof of the enclosure exits available space for the next object.
   In a preferred embodiment of the invention, this step is done by subtracting the distance to the roof detected by the sensor oriented in the vertical direction from the height of the next transported object measured by the height detector. If the available distance is greater than the height of the next object, the processing means determines that there is enough space to place that object.
3) If it is detected that there is available space for the next object, the conveyor belt is operated to place the object on the stack or heap of detected objects.
4) Otherwise, the front end of the conveyor belt moves laterally and/or backwards and the previous steps are repeated. In this way begins a new process for finding a place to place the next object.

Furthermore, before performing any lateral displacement of the front end of the conveyor belt, preferably it is verified by means of the sensors oriented in the lateral direction that there is not any obstacle, such as an operator or the walls of the enclosure, and in this way avoiding potential accidents.

One additional advantage is that the device of the present invention is prepared to load different truck or container lengths, or even continue with the loading if it is partially filled.

### Brief description of the figures

Fig. 1 shows a perspective view of an example of the automatic loading device of objects with the conveyor belt in folded state.
Fig. 2 shows a lateral view of the automatic loading device of objects with the conveyor belt in folded state.
Figs. 3a-3c show a perspective view, a lateral view, and a top view, respectively, of the fields of action of the proximity sensors, situated on the front end of the conveyor belt of the device according to the invention.
Fig. 4 shows a plan view of an installation that comprises two devices according to the invention mounted on guides and with the conveyor belt in deployed state, being one of the belts introduced into a truck box for performing the loading.
Fig. 5 shows a lateral view of the conveyor belt of a device according to the invention in deployed state and introduced into a truck box.
Fig. 6 shows a later view representative of the automatic loading process according to the present invention.

### Preferred embodiments of the invention

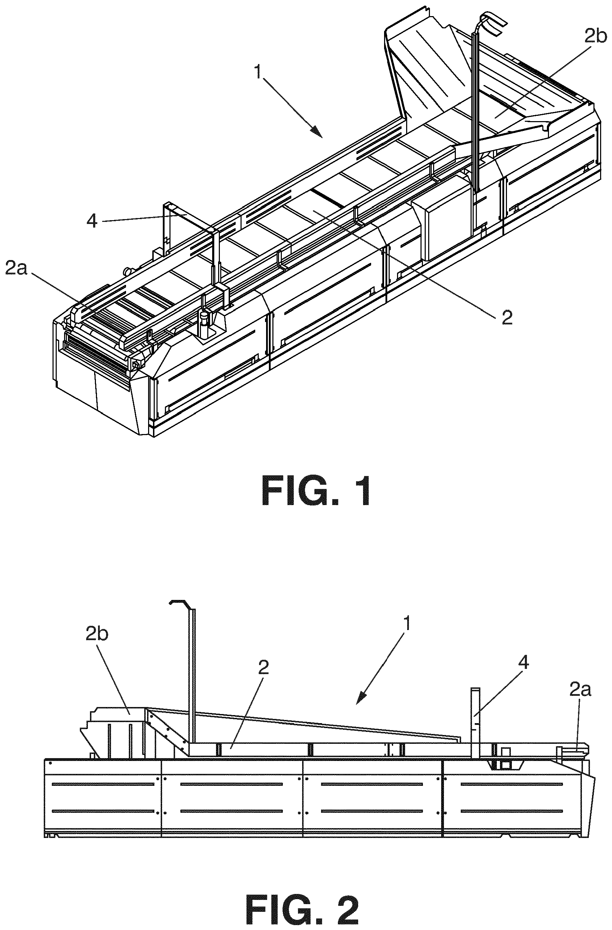

A particular example of the present invention is described with reference to the attached figures where the main parts that form it are shown. In Figs. 1 and 2 it is shown how the conveyor belt (2) has a front end (2a) that is intended to be introduced into the enclosure (11) that wants to be loaded, and one rear end (2b) remains on the outside thereof. A detector (4) of the height of the objects (10) that are transported on the belt (2) is also observed which in this example is designed in the form of a portal frame provided with a sensor that is situated above the belt (2). In both figures the telescopic conveyor belt (2) of the device (1) is shown in folded position.

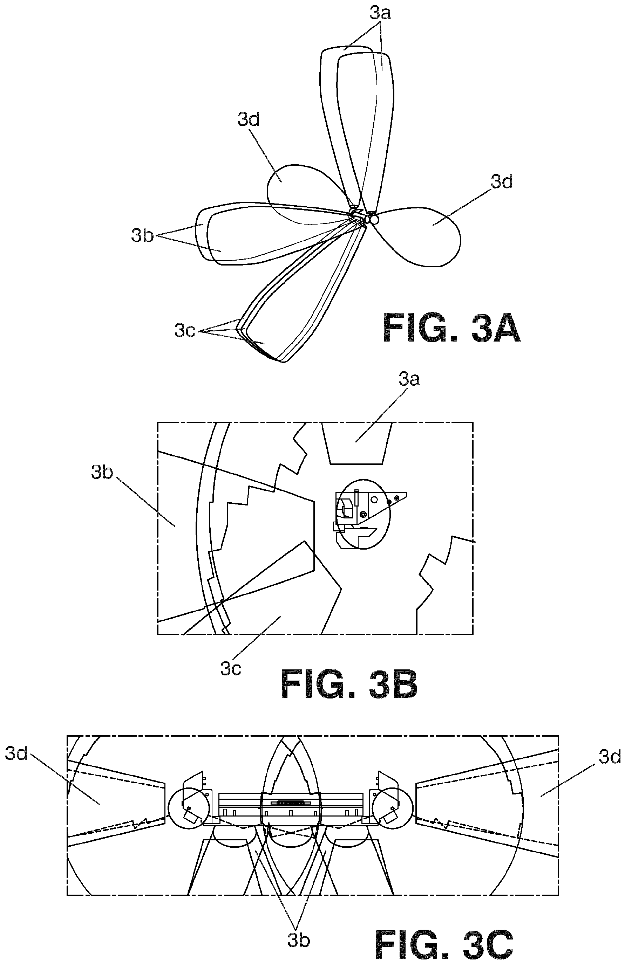

In Figs. 3a, 3b and 3c are represented the fields of action of the different used proximity sensors (3a, 3b, 3c, 3d). Specifically, in the present example two sensors (3a) oriented upwards for the detection of the roof of the truck box (11), two sensors (3b) oriented frontally forwards and three sensors (3) frontally oriented inclined downwards for the detection of the top edge of the heap or stack of objects (10) that are being loaded, and two sensors (3d) oriented towards the sides, to the right and to the left, respectively, for the detection of the lateral walls of the truck box (11), or in general of any obstacle that may be found in that position have been used.

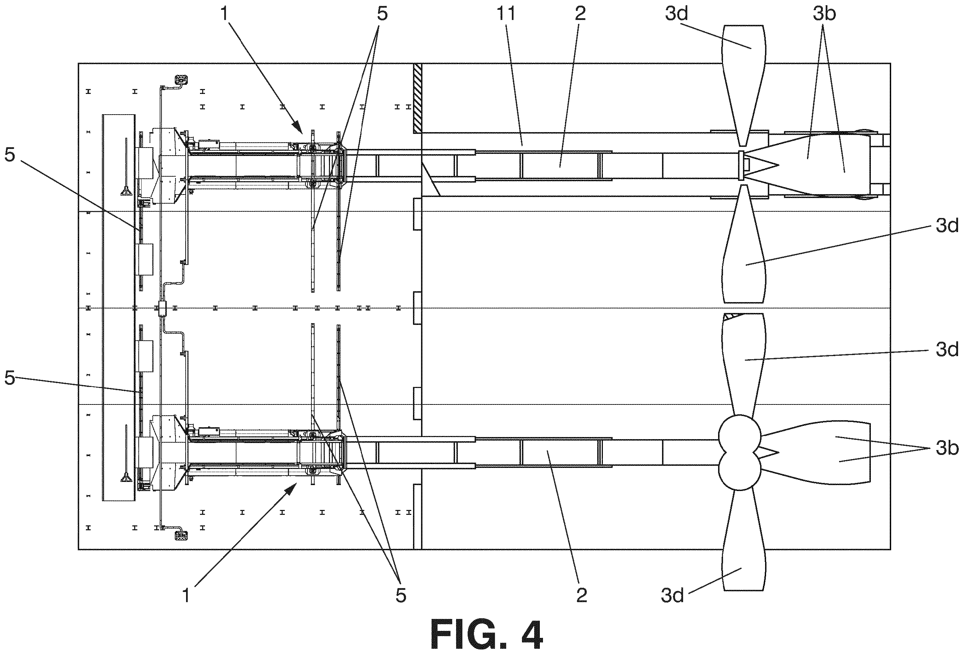

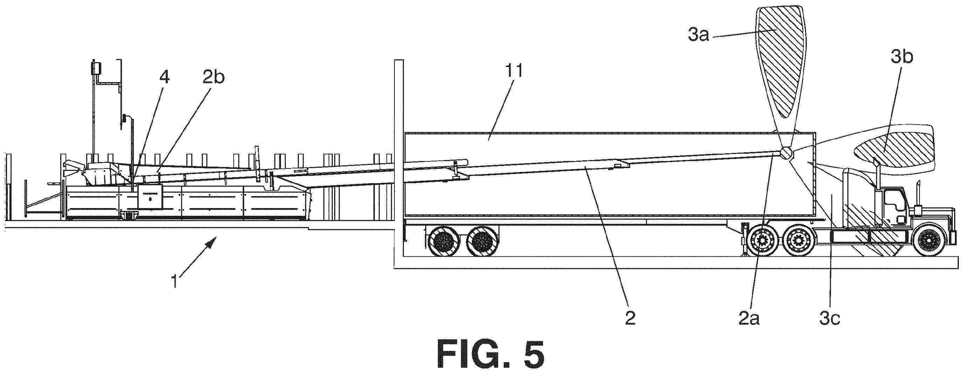

Fig. 4 shows a plane view of a loading bay provided with two devices (1) according to the present invention, which are mounted on guides (5). These guides (5) allow the lateral displacement of the devices (1) as a whole, which not only allows the lateral displacement of the front end (2a) of the belt (2) in the interior of a truck box (11), but also that a single device (1) can carry out the loading of trucks situated in several different loading bays. In this case, two devices (1) serve four loading bays. A truck has been represented in the loading bay situated at the upper part of the figure, being the front end (2) of the belt (2) of the corresponding device (1) in the enclosure that will be loaded, that in this example is the truck box (11). Fig. 5 shows a lateral view of this device (1) introduced into a truck box (11).

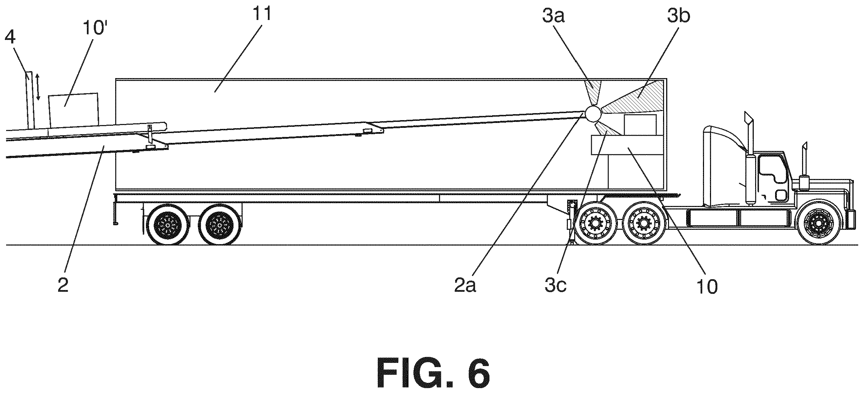

Fig. 6 shows a specific moment during a loading process of a truck box (11) like that shown in Fig. 5. There is already a stack of objects (10) at the back of the truck box (11), and the device (1) tries to place a new object (10') that moves forward on the conveyor belt (2). Firstly, the processing means (not shown in the figures) commands the displacement of the front end (2a) of the conveyor belt (2) to find the top edge of the stack of objects (10). The displacement can be vertical (for example, by means of a hydraulic mechanism), longitudinal (by extending or retracting the telescopic mechanism of the conveyor belt (2)), or lateral (by laterally moving the whole device (1) on the guides (5)).

When the frontally oriented sensors (3b)do not detect any object (10) and the sensors (3c) frontally oriented downwards detect an object (1), it can be determined that the front end (2a) of the conveyor belt (2) has found the top edge of the stack of objects (10) already loaded into the truck. The processing means then compares the distance from said front end (2a) to the roof of the truck box (11), obtained from the sensor (3a), with the height of the next object (10'), which has been measured using the height detector (4) situated over the conveyor belt (2). If there is enough space, as in this example, the processing means commands the conveyor belt (2) advance, and the object (10') is deposited on top of the stack of objects (10) already loaded.

Finally, the processing means commands again to find the top edge of the stack of objects (10). When a point is reached when there is not enough space between the front end (2a) of the conveyor belt (2) and the roof of the truck box (11) to place the subsequent object, the front end (2a) moves laterally or backwards until it finds a place where there is enough space. Furthermore, when lateral displacements are performed, it is previously verified by means of the sensors (3d) that there is no obstacle, as it may be a lateral wall of the truck box (11) or an operator.

It is easy to see that this new device (1) represents an important improvement with respect to the prior art devices where objects (11) were simply placed following a fixed program beforehand predetermined. Not only common accidents with the prior art devices are avoided, but also the performance with respect to the load volume on trucks is greatly improved.

## Claims

1. Device (1) for automatic loading of objects (10) in an enclosure (11), wherein the device (1) comprises:
- a conveyor belt (2); and
- a processing means that controls the movements of a front end (2a) of the conveyer belt (2) during the loading process,
- proximity or presence sensors (3a, 3b, 3c, 3d) arranged on the front end (2a) of the conveyor belt (2) that are designed to detect the position of said front end (2a) in relation to the previously loaded objects and/or to the roof and/or the walls of the enclosure, the processing means controlling the movements of the front end (2a) of the conveyor belt (2) according to the information obtained by said proximity or presence sensors (3a, 3b, 3c, 3d), **characterized in that** at least one sensor (3a) is oriented in the vertical direction, one sensor (3b) oriented in the frontal direction, and one sensor (3c) oriented in the frontal direction inclined downwards, wherein the sensors allow the determination of the height of objects arranged in front of the front end of the conveyor belt, wherein the processing means are arranged to control the movement of the front end of the conveyor band to continue loading based on the information obtained by said proximity or presence sensors.

2. Device (1) according to claim 2, which further comprises at least two sensors (3d) oriented towards the sides.

3. Device (1) according to any of the preceding claims, wherein the proximity sensors (3a, 3b, 3c, 3d) are chosen from the group formed by: optical sensors, ultrasonic sensors, capacitive sensors, inductive sensors and Hall Effect sensors.

4. Device (1) according to any of the preceding claims, which further comprises a detector (4) of the height of the transported objects (10) on the conveyor belt (2).

5. Device (1) according to any of the preceding claims, wherein the conveyor belt (2) is extensible by means of a telescopic mechanism.

6. Device (1) according to any of the preceding claims, wherein the conveyor belt (2) is laterally movable on guides (6).

7. Method for automatically loading objects (10) in an enclosure (11) using a device (1) according to any of the preceding claims, **characterized in that** it comprises the following steps:
- finding the top edge of the previously loaded objects (10) situated in front of the front end (2a) of the conveyor belt (2) by said proximity or presence sensors (3a, 3b, 3c, 3d);
- verifying that between said top edge and the roof of the enclosure (11) insufficient available space exists for the next object (10);
- moving the front end (2a) of the conveyor belt (2) laterally and/or backwards;
- verifying that between said top edge and the roof of the enclosure (11) available space exists for the next object (10);
- operating the conveyor belt (2).

8. Method according to claim 7 wherein it is considered that the top edge of the previously loaded objects (10) has been found when at least one sensor (3b) oriented in the frontal direction does not detect any object (10) and at least one sensor (3d) oriented in the frontal direction inclined downwards detects any abject (10).

9. Method according to any of the claims 7-8 wherein the verification of the available space between the top edge of the objects (10) and the roof of the enclosure (11) is done by subtracting the height of the next transported object (10') measured by the height detector (4) from the height of the distance to the roof of the enclosure (11) detected by at least one sensor (3a) oriented in the vertical direction.

10. Method according to any of the claims 7-9 wherein before performing a lateral displacement of the front end (2a) of the conveyor belt (2), it is verified by means of the at least two sensors (3d) oriented in the lateral direction that there is not any obstacle.

## Patentansprüche

1. Vorrichtung (1) zum automatischen Laden von Gegenständen (10) in ein Gehäuse (11), wobei die Vorrichtung (1) umfasst:
ein Förderband (2); und
ein Verarbeitungsmittel, das die Bewegungen eines vorderen Endes (2a) des Förderbandes (2) während des Ladevorgangs steuert,
Näherungs- oder Anwesenheitssensoren (3a, 3b, 3c, 3d), die an dem vorderen Ende (2a) des Förderbandes (2) angeordnet sind und dazu bestimmt sind, die Position des vorderen Endes (2a) in Bezug auf die zuvor geladenen Gegenstande und / oder auf das Dach und / oder die Wände des Gehäuses zu detektieren, wobei das Verarbeitungsmittel die Bewegungen des vorderen Endes (2a) des Förderbandes (2) gemäß den durch die von den Näherungs- oder Anwesenheitssensoren (3a, 3b, 3c, 3d) erhaltenen Informationen steuert,
**dadurch gekennzeichnet, dass**
mindestens ein Sensor (3a) in vertikaler Richtung ausgerichtet ist, ein Sensor (3b) in Frontalrichtung ausgerichtet ist und ein Sensor (3c) in Frontalrichtung nach unten geneigt ausgerichtet ist, wobei die Sensoren die Bestimmung der Höhe von Gegenständen, die vor dem vorderen Ende des Förderbandes angeordnet sind, ermöglichen, wobei das Verarbeitungsmittel angeordnet ist, um die Bewegung des vorderen Endes des Förderbandes zu steuern, um das Laden auf der Grundlage der von den Näherungs- oder Anwesenheitssensoren erhaltenen Informationen fortzusetzen.

2. Vorrichtung (1) nach Anspruch 2, die ferner mindestens zwei zu den Seiten hin orientierte Sensoren (3d) aufweist.

3. Vorrichtung (1) nach einem der vorhergehenden Ansprüche, wobei die Näherungssensoren (3a, 3b, 3c, 3d) ausgewählt sind aus der Gruppe gebildet aus: optischen Sensoren, Ultraschallsensoren, kapazitiven Sensoren, induktiven Sensoren und Hall-Effekt-Sensoren.

4. Vorrichtung (1) nach einem der vorhergehenden Ansprüche, die ferner einen Detektor (4) der Höhe der transportierten Gegenstände (10) auf dem Förderband (2) umfasst.

5. Vorrichtung (1) nach einem der vorhergehenden Ansprüche, wobei das Förderband (2) mittels eines Teleskopmechanismus ausziehbar ist.

6. Vorrichtung (1) nach einem der vorhergehenden Ansprüche, wobei das Förderband (2) über Führungen (6) seitlich bewegbar ist.

7. Verfahren zum automatischen Laden von Gegenständen (10) in ein Gehäuse (11) unter Verwendung einer Vorrichtung (1) nach einem der vorhergehenden Ansprüche, **dadurch gekennzeichnet, dass** es die folgenden Schritte umfasst: Finden der Oberkante des zuvor geladenen Gegenstands (10), der sich vor dem vorderen Ende (2a) des Förderbandes (2) befinden, durch die Näherungs- oder Anwesenheitssensoren (3a, 3b, 3c, 3d);
Verifizieren, dass zwischen der oberen Kante und dem Dach des Gehäuses (11) ungenügend verfügbarer Raum für den nächsten Gegenstand (10) vorhanden ist; Bewegen des vorderen Endes (2a) des Förderbandes (2) seitlich und / oder rückwärts;
Verifizieren, dass zwischen der oberen Kante und dem Dach des Gehäuses (11) verfügbarer Raum für den nächsten Gegenstand (10) vorhanden ist;
Betreiben des Förderbandes (2).

8. Verfahren nach Anspruch 7, wobei davon ausgegangen wird, dass die Oberkante des zuvor geladenen Gegenstands (10) gefunden wurde, wenn zumindest ein Sensor (3b), der in der Frontalrichtung ausgerichtet ist, kein Gegenstand (10) erfasst und zumindest ein Sensor (3d), der in der nach unten geneigten Frontalrichtung orientiert ist, irgendeinen Gegenstand (10) detektiert.

9. Verfahren nach einem der Ansprüche 7 bis 8, wobei die Überprüfung des verfügbaren Raums zwischen der Oberkante des Gegenstands (10) und dem Dach des Gehäuses (11) durch Subtraktion der Höhe des nächsten transportierten Gegenstands (10'), die von dem Höhendetektor (4) gemessen wird, von der Höhe des Abstands zum Dach des Gehäuses (11), die durch mindestens einen Sensor (3a), der in vertikaler Richtung ausgerichtet ist, erfasst wird, erfolgt.

10. Verfahren nach einem der Ansprüche 7 bis 9, wobei vor der Durchführung einer seitlichen Verschiebung des vorderen Endes (2a) des Förderbandes (2) mittels der mindestens zwei Sensoren (3d), die in der seitliche Richtung orientiert sind, verifiziert wird, dass es kein Hindernis gibt.

## Revendications

1. Dispositif (1) pour le chargement automatique d'objets (10) dans une enceinte (11), où le dispositif (1) comprend :
- une bande transporteuse (2) ; et
- un moyen de traitement qui commande les mouvements d'une extrémité avant (2a) de la bande transporteuse (2) pendant le processus de chargement,
- des capteurs de proximité ou de présence (3a, 3b, 3c, 3d) agencés sur l'extrémité avant (2a) de la bande transporteuse (2) qui sont conçus pour détecter la position de ladite extrémité avant (2a) par rapport aux objets préalablement chargés et/ou au toit et/ou aux parois de l'enceinte, le moyen de traitement commandant les mouvements de l'extrémité avant (2a) de la bande transporteuse (2) selon les informations obtenues par lesdits capteurs de proximité ou de présence (3a, 3b, 3c, 3d), **caractérisé en ce qu'**au moins un capteur (3a) est orienté dans la direction verticale, un capteur (3b) orienté dans la direction frontale, et un capteur (3c) orienté dans la direction frontale inclinée vers le bas, où les capteurs permettent de déterminer la hauteur d'objets agencés devant l'extrémité avant de la bande transporteuse, où le moyen de traitement est agencé pour commander le mouvement de l'extrémité avant de la bande transporteuse pour continuer le chargement sur la base des informations obtenues par lesdits capteurs de proximité ou de présence.

2. Dispositif (1) selon la revendication 2, qui comprend en outre au moins deux capteurs (3d) orientés vers les côtés.

3. Dispositif (1) selon l'une des revendications précédentes, dans lequel les capteurs de proximité (3a, 3b, 3c, 3d) sont choisis dans le groupe formé par : des capteurs optiques, des capteurs ultrasoniques, des capteurs capacitifs, des capteurs inductifs et des capteurs à Effet Hall.

4. Dispositif (1) selon l'une des revendications précédentes, qui comprend en outre un détecteur (4) de la hauteur des objets transportés (10) sur la bande transporteuse (2).

5. Dispositif (1) selon l'une des revendications précédentes, dans lequel la bande transporteuse (2) est extensible au moyen d'un mécanisme télescopique.

6. Dispositif (1) selon l'une des revendications précédentes, dans lequel la bande transporteuse (2) est latéralement mobile sur des guides (6).

7. Procédé pour le chargement automatique d'objets (10) dans une enceinte (11) en utilisant un dispositif (1) selon l'une des revendications précédentes, **caractérisé en ce qu'**il comprend les étapes suivantes qui consistent :
- à trouver le bord supérieur des objets préalablement chargés (10) situé devant l'extrémité avant (2a) de la bande transporteuse (2) par lesdits capteurs de proximité ou de présence (3a, 3b, 3c, 3d) ;
- à vérifier qu'il existe, entre ledit bord supérieur et le toit de l'enceinte (11), un espace disponible insuffisant pour l'objet suivant (10) ;
- à déplacer l'extrémité avant (2a) de la bande transporteuse (2) latéralement et/ou vers l'arrière ;
- à vérifier qu'il existe, entre ledit bord supérieur et le toit de l'enceinte (11), un espace disponible pour l'objet suivant (10) ;
- à faire fonctionner la bande transporteuse (2).

8. Procédé selon la revendication 7, dans lequel on considère que le bord supérieur des objets préalablement chargés (10) a été trouvé lorsqu'au moins un capteur (3b) orienté dans la direction frontale ne détecte aucun objet (10) et au moins un capteur (3d) orienté dans la direction frontale inclinée vers le bas détecte un objet (10) quelconque.

9. Procédé selon l'une des revendications 7 et 8, dans lequel la vérification de l'espace disponible entre le bord supérieur des objets (10) et le toit de l'enceinte (11) est réalisée en soustrayant la hauteur de l'objet transporté suivant (10') mesurée par le détecteur de hauteur (4) de la hauteur de la distance par rapport au toit de l'enceinte (11) détectée par au moins un capteur (3a) orienté dans la direction verticale.

10. Procédé selon l'une des revendications 7 à 9, dans lequel avant d'effectuer un déplacement latéral de l'extrémité avant (2a) de la bande transporteuse (2), on vérifie au moyen des au moins deux capteurs (3d) orientés dans la direction latérale qu'il n'y a pas d'obstacle.
